# FASCICULE DE BREVET EUROPEEN

(11) **EP 0 892 897 B1**
(45) Date de publication et mention de la délivrance du brevet: **25.09.2002**
(21) Numéro de dépôt: 97951330.6
(22) Date de dépôt: 12.12.1997
(51) Int. Cl.: F16F 15/00, H01L 41/09, F16B 5/02

(54) **AGENCEMENT DE FIXATION AMORTISSEUR POUR DISPOSITIF A PROTEGER D'AU MOINS CERTAINES VIBRATIONS**
DÄMPFENDE ANORDNUNG ZUR BEFESTIGUNG EINER VORRICHTUNG ZUM SCHUTZ GEGEN MINDESTENS EINIGE SCHWINGUNGEN
ARRANGEMENT OF A SHOCK ABSORBER FITTING OF A DEVICE TO BE PROTECTED AGAINST AT LEAST CERTAIN VIBRATIONS

(30) Priorité: 12.12.1996 FR 9615268
(43) Date de publication de la demande: 27.01.1999
(73) Titulaire: ALCATEL, 75088 Paris (FR)
(72) Inventeur: BREVART, Bertrand, 31000 Toulouse (FR); CHARBONNIER, Philippe, F-91530 Saint Chéron (FR); BARBET, Vincent, F-31400 Toulouse (FR)
(74) Mandataire: Lamoureux, Bernard
(86) Numéro de dépôt international: FR9702293
(87) Numéro de publication internationale: WO98026198

(56) Documents cités:
- EP-A- 0 375 570
- EP-A- 0 545 264
- DE-A- 4 142 885
- US-A- 4 927 084
- US-A- 5 589 725
- PATENT ABSTRACTS OF JAPAN vol. 095, no. 001, 28 février 1995 & JP 06 280932 A (NEC CORP), 7 octobre 1994,
- PATENT ABSTRACTS OF JAPAN vol. 015, no. 509 (M-1195), 24 décembre 1991 & JP 03 224895 A (MITSUBISHI ELECTRIC CORP), 3 octobre 1991,

## Description

L'invention concerne un agencement de fixation amortisseur pour dispositif susceptible d'être soumis à des vibrations dont on veut le protéger, notamment à fin d'éviter l'apparition de phénomènes de résonance perturbateurs et éventuellement destructeurs.

Un tel agencement est par exemple prévu pour la fixation sur un support d'un panneau solaire, d'une antenne de satellite, d'un bras de gerbage de réflecteur.

Il existe de nombreux agencements de fixation notamment mécaniques et électromécaniques qui visent à éliminer ou à défaut amortir les vibrations soit des dispositifs qu'ils fixent, soit encore de celles qui sont produites au niveau de ces dispositifs ou de leurs supports et qui sont susceptibles de se transmettre des uns aux autres.

En effet, certaines vibrations sont susceptibles d'avoir des effets perturbateurs et parfois destructeurs sur les dispositifs et/ou supports où elles interviennent, en particulier lorsqu'elles donnent naissance à des phénomènes de résonance. Ainsi par exemple, il existe un risque important de destruction par résonance d'une structure plane d'antenne de satellite lors du lancement de l'engin spatial destiné à l'amener en orbite, lorsque des vibrations à basse fréquence lui sont transmises par son support et/ou par voie acoustique.

Pour éviter de tels inconvénients, on cherche d'une part à appliquer un traitement direct par amortissement au niveau du dispositif que l'on veut protéger contre les vibrations et d'autre part à découpler la ou les source(s) de vibrations du dispositif à protéger.

Une solution classique pour assurer un tel découplage consiste à interposer des moyens amortisseurs passifs, tels que des rondelles en matériau élastomère, entre un dispositif et son support. Toutefois cette solution qui est très efficace vis-à-vis des vibrations à haute et moyenne fréquence, a pour inconvénient d'avoir tendance à amplifier les débattements occasionnés par les vibrations dont les fréquences sont basses. Dans le cas de vibrations dont la répartition en fréquence couvre une large bande, il est alors nécessaire d'associer aux moyens amortisseurs passifs des moyens non-linéaires de limitation de déplacement et/ou des moyens actifs de contrôle.

Il est connu d'utiliser des matériaux piézo-électriques tels que du PZT ou du PVDF dans des agencements passifs amortisseurs de vibration.

Il est aussi connu par ailleurs qu'un élément piézo-électrique ayant des électrodes shuntées par un montage inductif se comporte comme s'il était viscoélastique et possède alors un taux d'amortissement qui est de l'ordre de ceux des matériaux viscoélastiques et qui varie suivant la fréquence et en fonction des caractéristiques électriques du montage de shunt pour un élément donné.

Le document EP-A-0 375 570 décrit ainsi un procédé de conditionnement d'un élément piézo-électrique qui permet de notablement faire varier la raideur de cet élément en agissant sur une capacité incluse dans un montage résistif par l'intermédiaire duquel des électrodes comportées par cet élément sont shuntées. Il est prévu de mettre en oeuvre ce procédé dans des agencements amortisseurs. toutefois le taux d'amortissement susceptible d'être obtenu est très inférieur pour un élément piézo-électrique travaillant en flexion à celui qu'il est possible d'obtenir avec des éléments réalisés dans des matériaux viscoélastiques.

Ceci ne permet pas de réaliser un agencement de fixation sur support pour dispositif à protéger des vibrations qui présente à la fois une grande rigidité et un bon taux d'amortissement.

L'invention propose donc un agencement de fixation amortisseur pour dispositif à protéger des vibrations qui permette notamment d'amortir les phénomènes de résonance susceptibles d'intervenir dans la gamme des basses fréquences au niveau du dispositif.

L'agencement généralement connu comporte au moins une partie dite de soutien par laquelle il est fixé à un support par des moyens d'immobilisation et au moins un élément piézo-électrique qui a des électrodes électriquement shuntées par une impédance de structure déterminée et qui est en position d'interface entre le support et une partie de maintien de dimensions déterminées.

Selon une caractéristique de l'invention, l'agencement comporte au moins deux éléments piézo-électriques ayant chacun leurs électrodes électriquement shuntées par une impédance de structure déterminée. individuelle ou partagée, avec au moins un de ces éléments exploité en flexion qui est intercalé entre le support et une partie de support et une partie de soutien du dispositif à protéger et avec au moins un élément exploité en compression qui est intercalé entre soit le support, soit la partie de soutien considérée ci-dessus, et un des moyens d'immobilisation.

Selon une caractéristique de l'invention, l'agencement comporte un élément piézo-électrique exploité en flexion qui est réalisé sous la forme d'une plaque dimensionnée et positionnée de manière à déborder par rapport à la partie de maintien contre laquelle elle est collée, lorsque le dispositif est fixé.

Selon une caractéristique de l'invention, l'agencement comporte au moins un élément piézo-électrique exploité en compression qui est réalisé sous la forme d'une rondelle positionnée entre soit le support. soit une partie de maintien, et un moyen d'immobilisation de cette partie de maintien sur ce support, ladite rondelle étant montée autour d'une tige servant d'intermédiaire de serrage qui est comportée soit par le moyen d'immobilisation, soit par un moyen d'immobilisation complémentaire.

Selon une caractéristique d'une variante de l'invention, l'agencement comporte une pluralité d'éléments piézo-électriques exploités en flexion qui forment un empilage de plaques dont une première des plaques est collée contre une partie de maintien ou de support, ledit empilage étant dimensionné et positionné de manière à déborder par rapport à la partie de maintien ou de support contre laquelle la première plaque de l'empilage est collée.

Selon une caractéristique d'une variante de l'invention, l'agencement comporte au moins un élément piézo-électrique exploité en compression et réalisé sous la forme d'un empilage de rondelles qui est positionné entre soit le support, soit une partie de maintien, et un moyen d'immobilisation de cette partie de maintien sur ce support, ledit empilage étant monté autour d'une tige servant d'intermédiaire de serrage qui est comportée soit par le moyen d'immobilisation, soit par un moyen d'immobilisation complémentaire.

Selon une caractéristique de l'invention, l'agencement comporte des moyens d'immobilisation de type boulon avec au moins une tige de vis qui traverse tant un élément piézo-électrique, de type rondelle ou empilage de rondelles, qu'un élément piézo-électrique, de type plaque, dans lequel au moins une ouverture de passage pour chaque vis est menagée.

L'invention, ses caractéristiques et ses avantages sont précisés dans la description qui suit en liaison avec les figures évoquées ci-dessous.

La figure 1 présente un schéma de principe connu d'un circuit de raccordement électrique d'un élément piézo-électrique pour agencement amortisseur.

La figure 2 présente un premier exemple d'agencement selon l'invention.

La figure 3 présente un second exemple d'agencement selon l'invention.

La figure 4 présente un troisième exemple d'agencement selon l'invention.

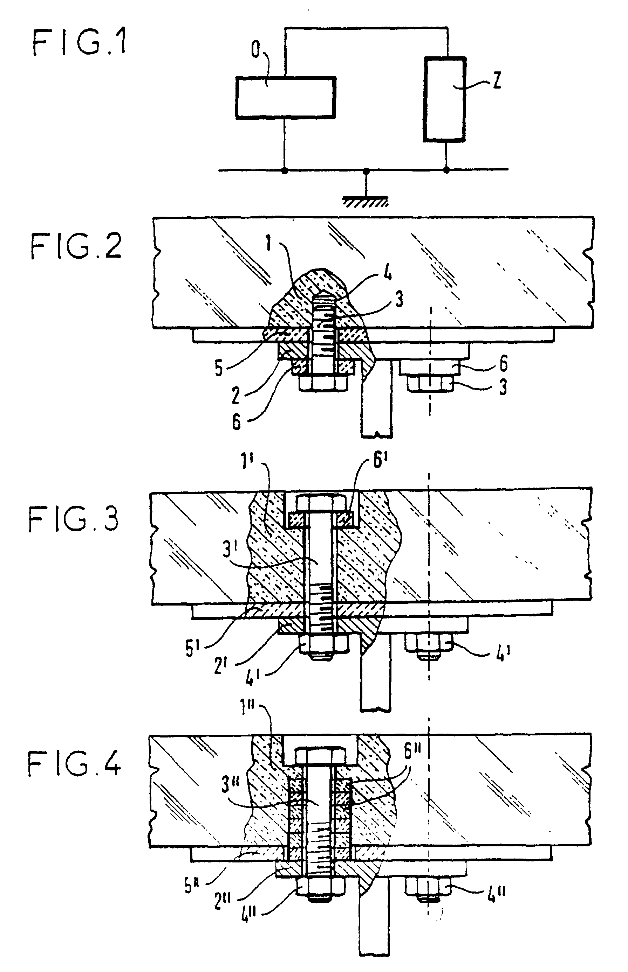

L'agencement selon l'invention est supposé comporter un circuit électrique, connu en son principe, incluant un ou un ensemble de plusieurs éléments piézo-électriques, qui est référencé 0 sur la figure 1 et aux bornes duquel une impédance, passive ou préférablement active référencée Z, est reliée. L'une des bornes commune à l'ensemble et à l'impédance y est prévue reliée à un potentiel de masse, comme connu.

Un circuit électrique de ce genre est supposé prévu dans chacun des agencements selon l'invention, il n'est pas montré dans les figures 2 à 4 ci-jointes dans la mesure où il n'a qu'un rapport indirect avec l'objet de l'invention.

L'agencement selon l'invention présenté en figure 2 est destiné à assurer la fixation d'un dispositif 1 sur un support 2, ce dispositif étant susceptible d'être soumis à des vibrations dont on veut le protéger.

Le dispositif est par exemple constitué par un panneau d'antenne d'un satellite, ou par un panneau solaire, il comporte au moins une partie, ici dite de soutien qui est seule montrée ici, par laquelle il est fixé sur une partie du support 1, ici représentée par un élément de type pied. La fixation du dispositif sur le support s'effectue par l'intermédiaire d'un agencement de fixation amortisseur éventuellement constitué de manière modulaire si le dispositif comporte plusieurs parties de soutien à chacune desquelles correspond alors une partie différente du support. Dans les exemples proposés, une seule partie de maintien a été présentée pour le dispositif 1 envisagé et comme il est déjà connu il est prévu d'utiliser des éléments piézo-électriques en combinaison avec des moyens d'immobilisation pour réaliser l'agencement de fixation amortisseur de vibration selon l'invention.

L'immobilisation de la partie de maintien du dispositif 1 sur une partie du support 1 est ici présentée à titre d'exemple comme réalisée à l'aide d'au moins d'un premier moyen d'immobilisation, tel qu'une vis 3, coopérant avec un second moyen complémentaire du premier, tel qu'un taraudage 4 complémentaire, ici supposé ménagé dans la partie de maintien du dispositif 1.

Bien entendu d'autres moyens d'immobilisation sont susceptibles d'être mis en oeuvre avec des effets équivalents, comme le montrent notamment les figures 3 et 4 où un écrou 4' est mis en oeuvre en coopération avec une vis 3' pour obtenir l'effet de serrage que permettent également d'obtenir les moyens d'immobilisation que constituent le taraudage 4 et la vis 3.

Selon l'invention et ainsi que le montre notamment la figure 2, un élément piézo-électrique 5, ici supposé réalisé sous la forme d'une plaque destinée à travailler en flexion, cette plaque est intercalée entre la partie de maintien du dispositif 1 ici considérée et la partie du support 2 sur laquelle cette partie de maintien vient se fixer. Un intercalaire isolant, non représenté ici, est prévu entre la plaque qui constitue l'élément 5 et l'une des deux parties entre lesquelles elle est intercalée et contre lesquelles elle s'applique par chacune des deux grandes faces qu'elle comporte. L'élément 5 est ici supposé mis à la masse par son contact avec celle des deux parties contre laquelle il s'applique directement, sans interposition d'intercalaire isolant, si comme supposé ici le dispositif 1 et le support 2 sont eux-mêmes mis à la masse au moins au niveau des deux parties supposées conductrices considérées ci-dessus.

La plaque qui constitue l'élément piézo-électrique 5 est par exemple en une ou plusieurs couches d'un matériau tel que le PZT ou le PVDF, comme indiquée plus haut et elle est destinée à amortir les éventuelles flexions du dispositif au niveau où la partie de maintien de ce dispositif est immobilisée sur la partie correspondante du support.

Dans une forme de réalisation, la plaque qui constitue l'élément piézo-électrique 5 déborde par rapport a au moins l'une des deux parties l'une de maintien du dispositif 1 et l'autre du support 2 entre lesquelles elle est intercalée.

Dans l'exemple de réalisation présenté sur la figure 2 où la partie du support où vient se fixer le dispositif est supposée de type pied comportant une embase élargie, c'est par rapport à cette embase que déborde la plaque. En effet dans de nombreux cas, le dispositif 1 est susceptible d'avoir des dimensions très supérieures à celle de l'embase du support 2 sur lequel il est fixé.

Selon une variante de l'invention, non représentée, il est prévu de substituer un empilage d'éléments piézo-électriques exploités en flexion au seul élément piézo-électrique 5 présenté sur la figure 2, ceci permettant de diviser en proportion du nombre d'éléments empilés, la tension appliquée à chaque élément par rapport au cas où un seul élément est mis en oeuvre.

Selon l'invention et ainsi que le montre notamment la figure 2, il est prévu d'associer au moins un autre élément piézo-électrique 6, ici supposé réalisé sous la forme d'au moins une rondelle destinée à travailler en compression, étant entendu que le terme rondelle doit être aussi compris comme couvrant toute pièce fonctionnellement équivalente. Chaque rondelle qui correspond à un élément piézo-électrique 6 différent est ici supposée intercalée entre la partie du support 1, contre laquelle est appliqué l'élément piézo-électrique 5 tel que considéré ci-dessus, et un des moyens d'immobilisation, soit ici la vis 3 ou plus précisément la tête de cette vis 3, qui fixe le dispositif 1 au support 2. Une telle rondelle enfilée sur la tige de la vis 3 correspondante est immobilisée entre la tête de cette vis et la partie de support 2 que traverse ladite vis pour venir se visser dans un taraudage 4 ménagé pour elle dans la partie de maintien du dispositif 1, lorsqu'un vissage a immobilisé ce dispositif sur le support.

Bien entendu dans de nombreuses formes de réalisation, non représentées, plusieurs éléments piézo-électriques 6 seront susceptibles d'être associés à un même élément piézo-électrique 5 au niveau d'un module de fixation d'une ou d'une des parties de maintien d'un dispositif sur une partie correspondante d'un support. Une telle disposition est symbolisée par la présence d'un axe disposé de manière symétrique à la vis 4 par rapport à l'axe supposé du pied de support 2, 2' et 2" sur les figures 2 à 4.

Dans la réalisation envisagée, chaque vis traverse la plaque constituant l'élément piézo-électrique 5 pour venir se visser dans un taraudage 4 de la partie de maintien du dispositif 1.

Dans une variante de réalisation présentée en figure 3, l'agencement comporte un élément piézo-électrique 5' correspondant à l'élément piézo-électrique 5 de la figure 2, mais chaque élément piézo-électrique 6' qui correspond à un élément 6 de cette figure 2 est ici serré contre une tête d'une vis 3' qui est accessible de l'autre côté de la partie de maintien du dispositif 1' par rapport à l'élément piézo-électrique 5' et au support 2'. Chaque vis 3' presse un élément piézo-électrique 6' qu'elle traverse contre la partie de maintien de dispositif qu'elle traverse également par sa tige. Cette dernière traverse aussi la partie de support 2' où se fixe ladite partie de maintien pour permettre le montage et le vissage d'un écrou de serrage 4' fonctionnellement analogue au taraudage 4.

Dans une autre variante de réalisation, présentée en figure 4, l'agencement comporte un élément piézo-électrique 5" correspondant à l'élément piézo-électrique 5 de la figure 2, mais chaque élément piézo-électrique 6" qui correspond à un élément 6 de cette figure 2 est ici constitué par un empilage de rondelles traversé par une tige de vis 3".

Chaque vis 3" est ici supposée associée à un écrou 4" dans un montage qui correspond ici à celui prévu pour une vis 3' et un écrou 4' dans la variante présentée en figure 3. L'empilage qui constitue l'élément piézo-électrique 6" vient alors traverser l'élément piézo-électrique 5" au niveau de l'ouverture prévue pour la vis 3" et il vient alors directement en appui contre la partie du support 1 où se fixe la partie de maintien du dispositif 1, lorsque l'écrou 4" est vissé sur la vis 3" de manière à assurer à leur niveau l'immobilisation du dispositif sur le support.

Dans une variante de réalisation, un ressort taré non représenté est éventuellement placé entre la tête de la vis 3 et la rondelle d'extrémité d'empilage qui est la plus proche pour faciliter les réglages de pression. Les rondelles constituant les éléments piézo-électriques 5, 5' et l'empilage constituant l'élément piézo-électrique 5" permettent respectivement d'amortir les flexions du dispositif 1 par compression dans le sens de leurs épaisseurs respectives dans une direction qui se trouve être perpendiculaire aux électrodes que possèdent ces éléments à leurs extrémités.

Ces éléments présentent alors un fort potentiel d'amortissement en raison du fait que le coefficient "k33" de conversion mécanique-électrique correspondant est supérieur à 0, 7 et donc élevé. Par contre la plaque constituant l'élément piézo-électrique 6, 6' ou 6" a un coefficient "k31" inférieur à 0,4 et donc nettement plus faible, ceci étant compensé par la surface étendue de la plaque.

Chacun des éléments piézo-électriques évoqués ci-dessus est d'une part relié au potentiel de masse par une électrode et isolé de ce potentiel par l'intermédiaire d'un intercalaire isolant au niveau d'une autre électrode comme indiqué plus haut. Comme connu de l'homme de métier, cette ou ces autre(s) électrode(s) sont reliées suivant le cas à une ou plusieurs impédances actives ou passives de structure(s) donnée(s) qui permet(tent) de shunter les éléments soit individuellement soit en parallèle suivant les choix effectués.

Un shuntage par une résistance pure permet d'obtenir un faible amortissement pour une large bande, cet amortissement est d'autant plus grand que la capacité électrique de l'élément piézo-électrique est faible.

La mise en oeuvre d'une impédance constituée par une résistance et une inductance passive, ou active et réalisée par exemple par association d'amplificateurs haute tension permet de contrôler une résonance.

Il est aussi possible d'utiliser un circuit électrique résonant multimodal auquel est éventuellement associé un montage permettant de faire varier la capacité d'un élément piézo-électrique aux bornes duquel ce circuit est placé.

Les éventuelles variations de la dynamique du dispositif 1 à protéger et notamment les résonances sont susceptibles d'être prises en compte par réglage des résistances et des inductances réglées à l'aide de résistances elles-mêmes réglables. Les réglages initiaux sont préférablement modifiés en temps réel en fonction des variations des fréquences de vibration au cours du temps qui sont alors déterminées par l'intermédiaire de moyens appropriés de traitement de signaux qui ne sont pas décrits plus avant ici dans la mesure où ils n'ont qu'un rapport indirect avec l'objet de la présente invention.

## Revendications

1. Agencement de fixation amortisseur pour dispositif (1) à protéger des vibrations qui comporte au moins une partie dite de soutien par laquelle ce dispositif est fixé à une partie d'un support (2) par des moyens d'immobilisation (3, 4), ledit agencement comportant au moins un élément piézo-électrique qui a des électrodes électriquement shuntées par une impédance de structure déterminée et qui est en position d'interface entre le support et la partie de soutien de dimensions déterminées, **caractérisé en ce que** le dit agencement comporte au moins deux éléments piézo-électriques (5, 6) ayant chacun leurs électrodes électriquement shuntées par une impédance de structure déterminée, individuelle ou partagée, avec au moins un de ces éléments (5) exploité en flexion qui est intercalé entre une partie de support et une partie de soutien du dispositif à protéger et avec au moins un élément (6) exploité en compression qui est intercalé entre soit la partie de support, soit la partie de soutien considérée ci-dessus, et un des moyens d'immobilisation.

2. Agencement de fixation, selon la revendication 1, **caractérisé en ce qu'**il comporte un élément piézo-électrique (5) exploité en flexion qui est réalisé sous la forme d'une plaque dimensionnée et positionnée de manière à déborder par rapport à au moins une des parties de maintien ou de support contre laquelle elle est collée.

3. Agencement de fixation, selon l'une des revendications 1, 2, **caractérisé en ce qu'**il comporte une pluralité d'éléments piézo-électriques (5) exploités en flexion qui forment un empilage de plaques dont une première des plaques est collée contre une partie de soutien ou de support, ledit empilage étant dimensionné et positionné de manière à déborder par rapport à la partie de maintien ou de support contre laquelle la première plaque de l'empilage est collée.

4. Agencement de fixation, selon l'une des revendications 1, 2, **caractérisé en ce qu'**il comporte au moins un élément piézo-électrique (6 ou 6') exploité en compression qui est réalisé sous la forme d'une rondelle positionnée entre soit une partie de support, soit une partie de maintien, et un moyen d'immobilisation de cette partie de maintien sur cette partie de support, ladite rondelle étant montée autour d'une tige servant d'intermédiaire de serrage qui est comportée soit par le moyen d'immobilisation, soit par un moyen d'immobilisation complémentaire.

5. Agencement de fixation, selon l'une des revendications 1, 2, **caractérisé en ce qu'**il comporte au moins un élément piézo-électrique (6") exploité en compression et réalisé sous la forme d'un empilage de rondelles qui est positionné entre soit une partie de support, soit une partie de maintien, et un moyen d'immobilisation de cette partie de maintien sur cette partie de support, ledit empilage étant monté autour d'une tige servant d'intermédiaire de serrage qui est comportée soit par le moyen d'immobilisation, soit par un moyen d'immobilisation complémentaire.

6. Agencement de fixation, selon l'une des revendications 1 à 5, **caractérisé en ce que** les moyens d'immobilisation sont de type boulon et comportent donc au moins une tige de vis (3, 3' ou 3") qui traverse tant un élément piézo-électrique (6, 6' ou 6"), de type rondelle ou empilage de rondelles, qu'un élément piézo-électrique (5, 5', 5"), de type plaque, dans lequel au moins une ouverture de passage pour chaque vis est ménagée.

## Patentansprüche

1. Dämpfende Anordnung zur Befestigung einer Vorrichtung (1) zum Schutz gegen Schwingungen, die mindestens eine sogenannte Unterstützung besitzt, über die diese Vorrichtung mittels Verriegelungen (3,4) an einem Halter (2) befestigt ist, wobei die genannte Anordnung mindestens ein piezoelektrisches Element (Quarzelement) besitzt, das Elektroden aufweist, die durch eine bestimmte Strukturimpedanz parallel geschaltet sind, und die sich in einer Interfaceposition zwischen dem Halter und der Unterstützung, die festgelegte Abmessungen besitzt, befindet, **dadurch gekennzeichnet, dass** die genannte Anordnung mindestens zwei piezoelektrische Elemente (Quarzelemente) (5, 6) aufweist, wobei bei jedem der Elemente die Elektroden durch eine bestimmte individuelle oder gemeinsam genutzte Strukturimpedanz parallel geschaltet sind, und wobei mindestens eines dieser Elemente (5) durchfedert, das zwischen einem Halter und einer Unterstützung der zu schützenden Vorrichtung zwischengeschaltet ist, und wobei mindestens ein Element (6) unter Druck steht, das entweder zwischen dem Halter oder der oben genannten Unterstützung zwischengeschaltet ist, und Verriegelungen.

2. Anordnung zur Befestigung nach Anspruch 1, **dadurch gekennzeichnet, dass** sie ein durchfederndes piezoelektrisches Element (Quarzelement) (5) aufweist, das die Form einer Platte hat, die derart dimensioniert und positioniert ist, dass sie. im Verhältnis zu mindestens einer der Unterstützungen oder des Halters, mit dem sie verklebt ist, herausragt.

3. Anordnung zur Befestigung nach Anspruch 1 oder 2, **dadurch gekennzeichnet, dass** sie mehrere durchfedernde piezoelektrischen Elemente (Quarzelemente) (5) aufweist, die eine lagenweise Anordnung von Platten bilden, wobei eine erste Platte mit einer Unterstützung oder einem Halter verklebt ist, und die genannte lagenweise Anordnung so dimensioniert und positioniert ist, dass sie im Verhältnis zu der Unterstützung oder dem Halter, mit dem die erste Platte der lagenweisen Anordnung verklebt ist, herausragt.

4. Anordnung zur Befestigung nach Anspruch 1 oder 2, **dadurch gekennzeichnet, dass** sie mindestens ein piezoelektrisches Element (Quarzelement) (6 oder 6') aufweist, das unter Druck steht und das die Form einer Scheibe besitzt, die entweder zwischen dem Halter oder der Unterstützung positioniert ist, und eine Verriegelung dieser Unterstützung an diesem Halter, wobei die genannte Scheibe um eine Spindel herum montiert ist, die als Klemmung dient und die entweder eine Verriegelung oder eine zusätzliche Verriegelung besitzt.

5. Anordnung zur Befestigung nach Anspruch 1 oder 2, **dadurch gekennzeichnet, dass** sie mindestens ein piezoelektrisches Element (Quarzelement) (6'') aufweist, das unter Druck steht und das die Form einer lagenweisen Anordnung von Scheiben besitzt, die entweder zwischen einem Halter oder einer Unterstützung positioniert ist, und einer Verriegelung dieser Unterstützung an diesem Halter, wobei die genannte lagenweise Anordnung um eine Spindel herum montiert ist, die als Klemmung dient und die entweder eine Verriegelung oder eine zusätzliche Verriegelung besitzt.

6. Anordnung zur Befestigung nach einem der vorhergehenden Ansprüche, **dadurch gekennzeichnet, dass** es sich bei den Verriegelungen um Schraubenbolzen handelt, die mindestens eine Schraubenspindel (3, 3' oder 3'') besitzen, die sowohl durch ein piezoelektrisches Element (Quarzelement) (6, 6' oder 6'') in der Form einer Scheibe oder einer lagenweisen Anordnung von Scheiben als auch durch ein piezoelektrisches Element (Quarzelement) (5, 5' oder 5'') in der Form einer Platte hindurchgeht, und in der mindestens eine Durchgangsöffnung für jede Schraube vorgesehen ist.

## Claims

1. A fixing arrangement with damping for fixing a device (1) to be protected from vibration, which device includes at least one "mounting" portion via which the device is fixed to a portion of a support (2) by fastening means (3, 4), said arrangement comprising at least one piezoelectric element which has electrodes shunted electrically by an impedance that is of determined structure and that is in an interface position between the support and the mounting portion of determined dimensions, said arrangement being **characterized in that** it comprises at least two piezoelectric elements (5, 6), each of which has its electrodes electrically shunted by an individual or shared impedance of determined structure, with at least one of the elements (5) being used in bending and being interposed between a portion of the support and a mounting portion of the device to be protected, and at least one element (6) being used in compression and being interposed between one of the fastening means and either the support portion or the mounting portion.

2. A fixing arrangement according to claim 1, **characterized in that** it includes a piezoelectric element (5) used in bending and implemented in the form of a plate that is dimensioned and positioned so as to extend beyond at least one of the portions against which it is secured, namely either the mounting portion or the support portion.

3. A fixing arrangement according to claim 1 or 2, **characterized in that** it comprises a plurality of piezoelectric elements (5) used in bending and forming a stack of plates, a first one of the plates being secured against a mounting portion or a support portion, said stack being dimensioned and positioned so as to extend beyond the mounting portion or the support portion against which the first plate of the stack is secured.

4. A fixing arrangement according to claim 1 or 2, **characterized in that** it comprises at least one piezoelectric element (6 or 6') used in compression and implemented in the form of a washer positioned between either a support portion or a mounting portion and fastening means for fastening the mounting portion to the support portion, said washer being mounted around a stem serving as a clamping intermediary included either in the fastening means, or in additional fastening means.

5. A fixing arrangement according to claim 1 or 2, **characterized in that** it comprises at least one piezoelectric element (6") used in compression and implemented in the form of a stack of washers positioned between either a support portion or a mounting portion and fastening means for fastening the mounting portion to the support portion, said stack being mounted around a stem serving as a clamping intermediary included either in the fastening means or in additional fastening means.

6. A fixing arrangement according to any one of claims 1 to 5, **characterized in that** the fastening means are of the nut-and-bolt type, and they thus include at least one bolt stem (3, 3' or 3") which passes both through a piezoelectric element (6, 6', or 6") of the washer or stack of washers type, and through a piezoelectric element (5, 5', 5") of the plate type, provided with a through opening for receiving each bolt.
